# EUROPÄISCHE PATENTSCHRIFT

(11) **EP 2 269 847 B1**
(45) Veröffentlichungstag und Bekanntmachung des Hinweises auf die Patenterteilung: **09.04.2014**
(21) Anmeldenummer: 10160255.5
(22) Anmeldetag: 19.04.2010
(51) Int. Cl.: B60G 9/02, B62D 7/06

(54) **Fahrzeug mit pendelbeweglicher Achse**
Vehicle with swinging axis
Véhicule doté d'un axe à mouvement oscillant

(30) Priorität: 01.07.2009 DE 102009031426
(43) Veröffentlichungstag der Anmeldung: 05.01.2011
(73) Patentinhaber: CLAAS Selbstfahrende Erntemaschinen GmbH, 33428 Harsewinkel (DE)
(72) Erfinder: Wagemann, Sebastian, 59302, Oelde-Sünnighausen (DE); Gersmann, Manfred, 48231, Warendorf (DE)

(56) Entgegenhaltungen:
- EP-A1- 0 597 515
- EP-A2- 1 997 654
- DE-A1- 10 247 699
- US-A- 5 322 310

## Beschreibung

Die Erfindung betrifft ein Fahrzeug mit pendelbeweglicher Achse nach dem Oberbegriff des Anspruchs 1.

Aus der gattungsbildenden DE 10 2007 025 598 A1 (EP 1 997 654 A2) ist eine als Mähdrescher ausgeführte landwirtschaftliche Arbeitsmaschine bekannt geworden, deren Hinterachse pendelbeweglich am Chassis des Mähdreschers angeordnet ist. In einer Ausgestaltungsvariante ist die lenkbare Räder umfassende Hinterachse über zwei schwenkbewegliche Lenker an dem Chassis angeordnet. Die Geometrie der Lenker ist so beschaffen, dass die Hinterachse bodenunebenheitsbedingt eine Pendelbewegung um eine virtuelle Pendelachse ausführen kann, wobei die Pendelbewegung zugleich eine Verschiebung der Hinterachse quer zur Fahrtrichtung der landwirtschaftlichen Arbeitsmaschine bewirkt. Diese Bewegung hat den Effekt, dass eine Kollision der gelenkten Räder mit den den Rädern benachbarten Bereichen des Chassis vermieden wird, sodass Bodenunebenheiten nicht zur Reduzierung des möglichen Lenkeinschlags führen. Da die pendelbewegungsbedingte Querverschiebung nur in unebenem Gelände erfolgt, hängt der mögliche Lenkwinkeleinschlag in der Ebene von den verfügbaren Freiräumen der gelenkten Räder zu den Verkleidungsteilen des Chassis ab. Dieser verfügbare Freiraum nimmt mit zunehmender Maschinengröße erheblich ab, da einerseits die komplexer gestalteten Arbeitsorgane der landwirtschaftlichen Arbeitsmaschine mehr Bauraum benötigen und zum anderen die höheren Maschinenmassen größere Räder erfordern. Im Ergebnis führt dies dazu, dass der in der Ebene umsetzbare maximale Lenkwinkel abnimmt.

Aus der EP 1 154 925 ist eine weitere Pendelachsstruktur bekannt geworden, bei der die Hinterachse über eine Schwenkachse am Chassis der landwirtschaftlichen Arbeitsmaschine angelenkt ist, sodass die Räder der Hinterachse Bodenunebenheiten folgen können. Diese weit verbreitete Struktur von Pendelachsen hat jedoch den Nachteil, dass sich die Hinterachse bei Bodenunebenheiten auf einer Kreisbahn um die Pendelachse bewegt, sodass die oberen Bereiche der hangaufwärts liegenden Laufräder jeweils in Richtung der Verkleidungsteile des Chassis bewegt werden. Zur Vermeidung dieser Kollisionen wird in der EP 1 154 925 eine Achsstruktur vorgeschlagen, bei der einerseits der Achsschenkelbolzen in Vorwärtsfahrtrichtung vor der Achszapfennabe positioniert ist und zugleich die gelenkten Laufräder teleskopierbar im Achskörper fixiert sind. Während die Position des Achsschenkelbolzens in engen Grenzen eine Umsetzung größerer Lenkwinkel ermöglicht, wird der eigentliche Effekt dadurch erzielt, dass die Laufräder im Arbeitsbetrieb seitlich aus der Hinterachse herausgezogen werden können, sodass die Räder einen größeren Abstand zu den Verkleidungsteilen des Chassis einnehmen. Ein derartiger Umbauprozess ist aufwendig, da die Maschine hierfür zumindest im Bereich der Hinterachse angehoben werden muss. Zudem lässt sich vor dem Befahren eines Felds nur schwer abschätzen mit welchen Bodenunebenheiten gerechnet werden muss, sodass die ausgefahrene Position der gelenkten Räder nicht mit den tatsächlich zu durchfahrenden Bodenunebenheiten korrespondieren muss. Dies führt im Ergebnis dazu, dass trotz der geänderten Achsschenkelposition in unebenem Gelände Kollisionen der gelenkten Räder mit den Verkleidungsteilen des Chassis auftreten können.

Es ist deshalb Aufgabe der Erfindung die beschriebenen Nachteile des Standes der Technik zu vermeiden und insbesondere eine Achsstruktur vorzuschlagen, die sowohl in ebenem als auch in unebenem Gelände die Umsetzung großer Lenkeinschläge ermöglicht, ohne dass die gelenkten Räder mit dem Chassis des Fahrzeugs kollidieren.

Diese Aufgabe wird erfindungsgemäß durch die kennzeichnenden Merkmale des Anspruchs 1 gelöst.

Indem das Fahrzeug zumindest eine dem Chassis zugeordnete, Laufräder tragende Vorderachse und einer der Vorderachse in Vorausfahrtrichtung nachgeordnete, zumindest zwei lenkbare Räder tragenden Hinterachse umfasst, wobei die Hinterachse quer zur Fahrrichtung pendelnd am Chassis angelenkt ist und zumindest einen Achskörper umfasst und Bereiche des Chassis den Rädern der Hinterachse wenigstens teilweise benachbart zugeordnet sind, wobei die Hinterachse mittels einer eine quer zur Fahrtrichtung orientierte Verschiebung der Hinterachse ermöglichenden Pendelvorrichtung mit dem Chassis gekoppelt ist und jedes Rad der Hinterachse mittels einer eine quer zur Fahrtrichtung orientierte Verschiebung jedes Rades ermöglichenden Schwenkvorrichtung mit dem Achskörper der Hinterachse gekoppelt ist, wobei die Schwenkvorrichtung drehfest mit dem Achskörper verbundene gabelförmige Schwenklagerungen zur Schwenkbeweglichen Aufnahme der jedem Rad zugeordneten Achsschenkelbolzen umfasst, die frei drehbar von dem jeweiligen Achsschenkel und einem diesem unter einem Winkel angeformten Spurstangenbefestigungsteil umgriffen werden, welche an ihren freien Enden jeweils gelenkig eine Spurstange aufweisen, die anderenends schwenkbeweglich mit einem Lenkzylinder verbunden sind, wird sichergestellt, dass das Fahrzeug sowohl in ebenem als auch in unebenem Gelände große Lenkeinschläge realisieren kann, ohne dass die gelenkten Räder mit dem Chassis des Fahrzeugs kollidieren.

In einer vorteilhaften Ausgestaltung der Erfindung ist die Pendelvorrichtung als Koppelgetriebe ausgebildet ist, wobei durch hangneigungsbedingte Bewegung der Koppelglieder des Koppelgetriebes die quer zur Fahrtrichtung orientierte Verschiebung der Hinterachse bewirkt wird. Eine solche Ausführung hat insbesondere den Vorteil, dass die Position der Hinterachse unmittelbar auf die konkrete Bodenneigung reagiert, sodass unabhängig von der Intensität der Bodenneigung eine Kollision der gelenkten Räder mit dem Chassis stets vermieden wird.

Eine Kollision der gelenkten Räder mit dem Chassis wird in einer weiteren vorteilhaften Ausgestaltung der Erfindung auch dadurch sicher vermieden, dass die Verschiebung der Hinterachse eine Vergrößerung des Abstandes des in Verschieberichtung liegenden Rades zu dem ihm benachbarten Bereich des Chassis bewirkt, während das weitere Rad unter den diesem Rad benachbarten Bereich des Chassis verschwenkt wird.

In einer vorteilhaften Weiterbildung der Erfindung sind die Koppelglieder als paarweise angeordnete Lenker ausgebildet, die jeder mit dem Achskörper und dem Chassis durch obere und untere Gelenke verbunden sind, wobei der Abstand zwischen den oberen Gelenken der Lenker kleiner ist als der Abstand zwischen den unteren Gelenken derselben. Eine solche Struktur hat insbesondere den Vorteil, dass auch in unebenem Gelände eine kraftgerechte Struktur erhalten bleibt, die auf kurzem Weg die Stützlasten des Fahrzeugs auf den Boden überträgt. Diese Effekte werden auch dadurch noch intensiviert, wenn in einer weiteren vorteilhaften Ausgestaltung der Erfindung die oberen und unteren Gelenke jedes der paarweise angeordneten Lenker denselben Abstand zueinander haben und dieser Abstand jeweils geringer ist als der Abstand der unteren Gelenke zueinander.

Gemäß der Erfindung ist die Schwenkvorrichtung als Koppelgetriebe ausgebildet, wobei durch Aktivierung der Bewegung der Koppelglieder des Koppelgetriebes die quer zur Fahrtrichtung orientierte Verschiebung der Räder der Hinterachse zu deren Achskörper bewirkt wird. Eine derartige Struktur der Adaptierung der gelenkten Räder an dem jeweiligen Achskörper hat vor allem den Vorteil, dass unmittelbar in Abhängigkeit von dem gewählten Lenkeinschlag eine Querverschiebung der Position der gelenkten Räder stattfindet und die seitliche Lageänderung um so größer sein wird, je größer der Lenkeinschlag ist.

Eine konstruktiv einfache und damit kostengünstige Koppelgetriebestruktur wird in einer vorteilhaften Weiterbildung der Erfindung dann erreicht, wenn das Koppelgetriebe der Schwenkvorrichtung zumindest folgende Koppelglieder umfasst:
- eine jedem Rad zugeordnete und an der Hinterachse befestigte Schwenklagerung,
- einen Achsschenkelbolzen, der schwenkbeweglich von der Schwenklagerung aufgenommen wird
- einem in eine Achsschenkelnabe mündenden Achsschenkel, der drehbar mit dem Achsschenkelbolzen verbunden ist und die Achsschenkelnabe das jeweilige Rad aufnimmt und
- der Achsschenkelbolzen bezüglich der Vorausfahrtrichtung vor dem jeweiligen Achsschenkel angeordnet ist.

Indem jedes Koppelgetriebe der Schwenkvorrichtung ein jeder Schwenklagerung zugeordnetes Spurstangenbefestigungsteil zur schwenkbeweglichen Aufnahme einer Spurstange umfasst, wird auf einfache Weise die zwangsweise Rückführung der gelenkten Räder auf die Geradeausspur in die erfindungsgemäße Schwenkvorrichtung integriert.

Auf technisch bewährte und konstruktiv einfache Weise wird die Lenkbewegung der gelenkten Räder dadurch realisiert, dass der Hinterachse ein als doppeltwirkender Hubzylinder ausgebildeter Lenkzylinder zugeordnet ist, der am Achskörper der Hinterachse lagefixiert ist und der jeweils schwenkbeweglich mit den Spurstangen gekoppelt ist.

In einer vorteilhaften Weiterbildung der Erfindung lassen sich mit dem Fahrzeug dann kollisionsfrei große Lenkwinkel realisieren, wenn die Räder der Hinterachse in der maximalen Kurvenposition eine Lage einnehmen, in der das innen liegende Rad eine Vorderkante aufweist, die in der Nähe des diesem Rad benachbarten Bereichs des Chassis angeordnet ist und in der eine hintere Kante des äußeren Rades in der Nähe des diesem Rad benachbarten Bereichs des Chassis angeordnet ist

In einer vorteilhaften Ausgestaltung der Erfindung erreicht das Fahrzeug dann kleine Wendekreise und damit eine hohe Wendigkeit, wenn in der maximalen Kurvenposition das innere Rad einen Wenderadius aufweist, der kleiner als der Wenderadius des äußeren Rades ist.

Aufgrund des bei Landmaschinen stark eingeschränkten Bauraumes und stetig zunehmenden Reifengröße kommen die beschriebenen Effekte dann besonders zur Geltung, wenn das Fahrzeug als landwirtschaftliche Arbeitsmaschine, insbesondere Mähdrescher ausgebildet ist.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine Seitenansicht einer landwirtschaftlichen Arbeitsmaschine
- Figur 2: eine Vorderansicht der erfindungsgemäßen Hinterachse gemäß der in Figur 1 eingezeichneten Blickrichtung A
- Figur 3: eine Draufsicht auf die erfindungsgemäße Hinterachse

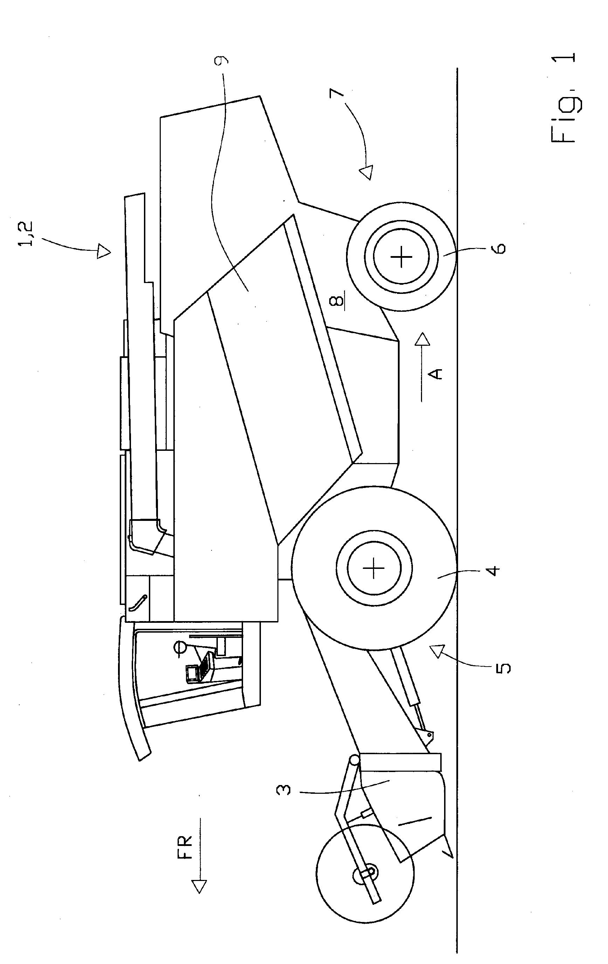

Figur 1 zeigt eine als Mähdrescher 2 ausgeführte landwirtschaftliche Arbeitsmaschine 1, die in einem frontseitigen, einem adaptierten Vorsatzgerät 3 nachgeordneten Bereich eine Laufräder 4 tragende Vorderachse 5 aufnimmt, wobei die Laufräder 4 starr mit der Vorderachse 5 verbunden sind und aktiv angetrieben werden. Im rückwärtigen Bereich der landwirtschaftlichen Arbeitsmaschine 1 ist der Vorderachse 5 eine gelenkte Räder 6 aufnehmende erfindungsgemäße Hinterachse 7 nachgeordnet, wobei den gelenkten Rädern 6 in noch näher zu beschreibender Weise Bereiche 8 des Chassis 9 der landwirtschaftlichen Arbeitsmaschine 1 wenigstens teilweise benachbart zugeordnet sind.

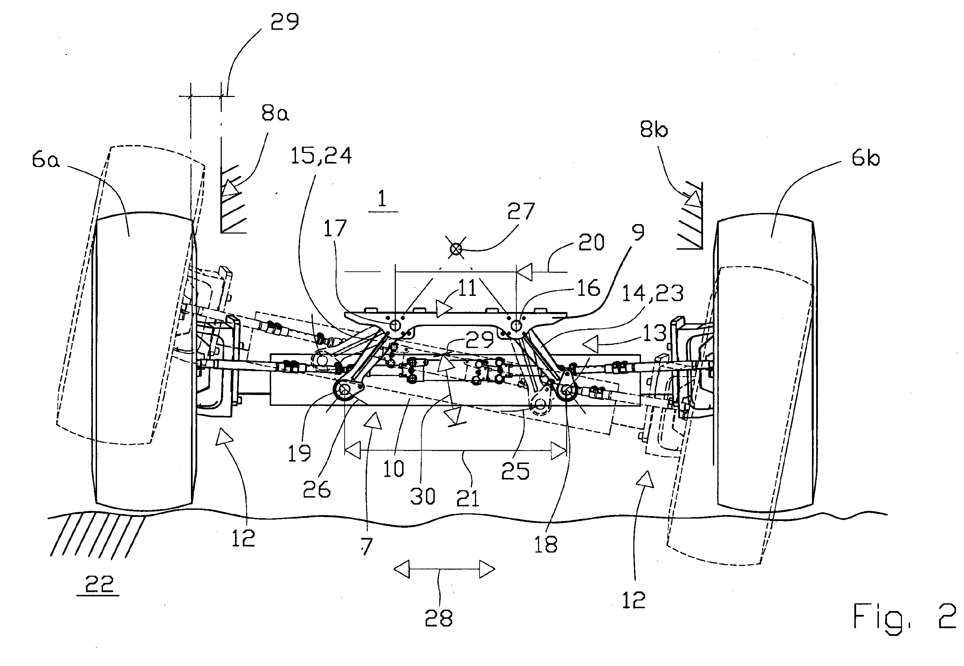

Figur 2 zeigt die erfindungsgemäße Hinterachse 7 im Detail. Die Hinterachse 7 umfasst einen Achskörper 10, der über eine noch näher zu beschreibende Pendelvorrichtung 11 am Chassis 9 der landwirtschaftlichen Arbeitsmaschine 1 schwenkbeweglich angelenkt ist. Zudem ist jedes der gelenkten Räder 6a, b der Hinterachse 7 über eine noch näher zu beschreibende Schwenkvorrichtung 12 mit dem Achskörper 10 der Hinterachse 7 verbunden.

Die Pendelvorrichtung 11 wird von einem Koppelgetriebe 13 gebildet, welches paarweise angeordnete als Schwingen ausgeführte Lenker 14, 15 umfasst, wobei jeder Lenker 14, 15 mittels eines oberen Gelenks 16, 17 schwenkbeweglich am Chassis 9 befestigt ist. Jeder der Lenker 14, 15 nimmt zudem ein unteres Gelenk 18, 19 auf mittels dessen der jeweilige Lenker 14, 15 schwenkbeweglich an dem Achskörper 10 der Hinterachse 7 adaptiert ist. Die oberen und unteren Gelenke 16-19 sind dabei so zueinander positioniert, dass der Abstand 20 der oberen Gelenke 16, 17 zueinander geringer als der Abstand 21 der unteren Gelenke 18, 19 der paarweise angeordneten Lenker 14, 15 zueinander ist.

Je nach Neigung des Feldbodens 22 quer zur Fahrtrichtung FR schwenken die die Koppelglieder 23, 24 des Koppelgetriebes 13 bildenden Lenker 14, 15 um die oberen Gelenke 16, 17 auf den in Figur 2 dargestellten Kreisbahnen 25, 26. Zugleich pendelt die Hinterachse 7 um eine virtuelle Pendelachse 27, deren Lage im Raum durch die jeweilige Lage der Lenker 14, 15 bestimmte wird. Dieses Pendeln der Hinterachse 7 um die virtuelle Pendelachse 27 führt zugleich zu einer Verschiebung 28 der Hinterachse 7 quer zur Fahrtrichtung FR. Diese Verschiebung 28 der Hinterachse 7 führt dazu, dass sich der Abstand 29 des in Verschieberichtung liegenden Rades 6a zu dem ihm benachbarten Bereich 8a des Chassis 10 vergrößert, während das weitere Rad 6b unter den diesem Rad 6b benachbarten Bereich 8b des Chassis 9 verschwenkt wird, sodass sich die Kollisionsgefahr zwischen den gelenkten Rädern 6a, b der Hinterachse 7 und dem Chassis 9 beim Lenken in einer Schräglage der landwirtschaftlichen Arbeitsmaschine 1 erheblich verringert. Eine besonders sichere und kraftgerechte Pendelbewegung der Hinterachse 7 wird dann erreicht, wenn beide Lenker 14,15 gleich groß sind, dass heißt, an jedem Lenker 14, 15 die oberen und unteren Gelenke 16-19 jeweils denselben Abstand 30 zueinander haben und dieser Abstand 30 größer ist als der Abstand 20 der oberen Gelenke 16, 17 benachbarter Lenker 14, 15 zueinander.

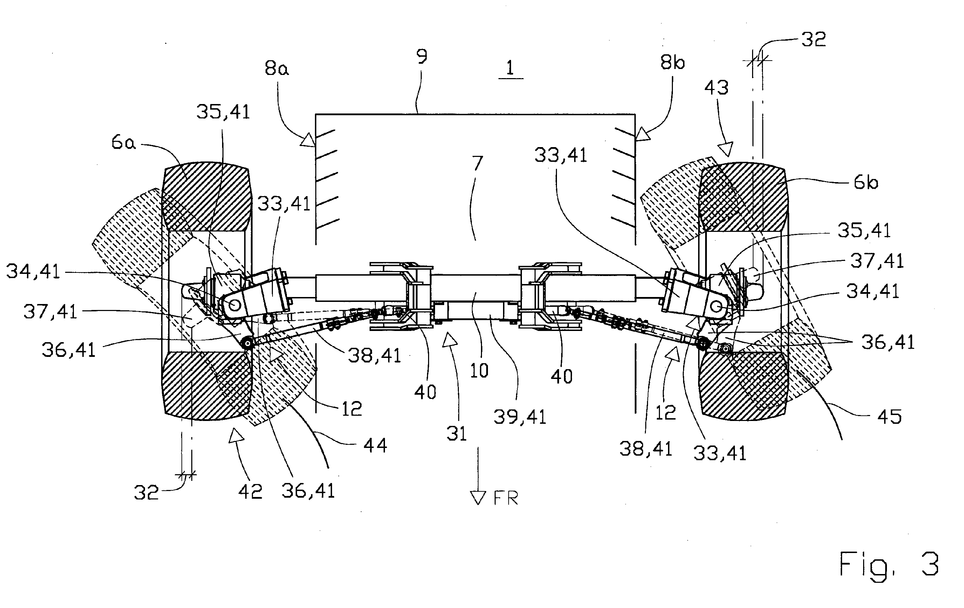

Figur 3 zeigt im Detail die erfindungsgemäße Schwenkvorrichtung 12 die jeweils das ihr zugeordnete Rad 6a, 6b schwenkbeweglich mit dem Achskörper 10 der Hinterachse 7 verbindet. Die Schwenkvorrichtung 12 ist als Koppelgetriebe 31 ausgebildet, wobei die noch näher zu beschreibende Aktivierung des Koppelgetriebes 31 zu einer quer zur Fahrtrichtung FR orientierten Verschiebung 32 der Räder 6a, 6b der Hinterachse 7 gegenüber dem Achskörper 10 führt.

Im dargestellten Ausführungsbeispiel umfasst die Schwenkvorrichtung 12 zunächst drehfest mit dem Achskörper 10 verbundene gabelförmige Schwenklagerungen 33 zur schwenkbeweglichen Aufnahme der jedem Rad 6a, 6b zugeordneten Achsschenkelbolzen 34. Jeder Achsschenkelbolzen 34 wird frei drehbar von dem jeweiligen Achsschenkel 35 und einem diesem unter einem Winkel angeformten Spurstangenbefestigungsteil 36 umgriffen, wobei der Achsschenkel 35 an seinem freien Ende in die Achszapfennabe 37 mündet, die schließlich das jeweilige Rad 6a, 6b der Hinterachse 7 aufnimmt. Erfindungsgemäß ist jeder Achsschenkelbolzen 34 vor dem ihm zugeordneten Achsschenkel 35 bezüglich der Vorwärtsfahrtrichtung FR der landwirtschaftlichen Arbeitsmaschine 1 angeordnet. Weiter nehmen die Spurstangenbefestigungsteile 36 an ihren freien Enden jeweils gelenkig eine Spurstange 38 auf. Jede der Spurstangen 38 ist anderenends schwenkbeweglich mit dem als doppeltwirkender Hubzylinder ausgebildeten Lenkzylinder 39 verbunden, wobei der Lenkzylinder 39 an dem Achskörper 10 der Hinterachse 7 lagefixiert ist. Durch Druckbeaufschlagung des Lenkzylinders 39 werden die Kolbenstangen 40 aus dem Lenkzylinder 39 ausgefahren oder in diesen hinein bewegt, wobei sich die Räder 6a, 6b der Hinterachse 7 zwischen den in Figur 3 durchgezogen und gestrichelt dargestellten Lenkpositionen bewegen können. Mithin bilden im dargestellten Ausführungsbeispiel die Schwenklagerungen 33, die Achsschenkelbolzen 34, die Achsschenkel 35 mit zugehöriger Achsschenkelnabe 37, die Spurstangenbefestigungsteile 36, die Spurstange 38 sowie der Lenkzylinder 39 die Koppelglieder 41 der erfindungsgemäßen Schwenkvorrichtung 12.

Die Länge der Koppelglieder 41 ist zudem so aufeinander abgestimmt, dass die Räder 6a, 6b der Hinterachse 7 in der in Figur 3 dargestellten maximalen Kurvenposition eine Lage einnehmen, in der das innen liegende Rad 6a eine Vorderkante 42 aufweist, die in der Nähe des diesem Rad 6a benachbarten Bereichs 8 des Chassis 9 angeordnet ist und in der eine hintere Kante 43 des äußeren Rades 6b in der Nähe des diesem Rad 6b benachbarten Bereichs 8 des Chassis 9 angeordnet ist. Die Dimensionierung der Koppelglieder 41 ist zugleich so gewählt, dass in der in Figur 3 dargestellten maximalen Kurvenposition das innere Rad 6a einen Wenderadius 44 aufweist, der kleiner als der Wenderadius 45 des äußeren Rades 6b ist, dass heißt beide lenkbaren Räder 6a, 6b der Hinterachse 7 haben bis zum Erreichen ihrer maximalen Lenkpositionen unterschiedlich große Lenkwinkel überstrichen, sodass sichergestellt wird, dass auch in den maximalen Lenkpositionen eine Kollision mit Bereichen 8 des Chassis 9 vermieden wird.

### Bezugszeichenliste:

- 1: landwirtschaftliche Arbeitsmaschine
- 2: Mähdrescher
- 3: Vorsatzgerät
- 4: Laufrad
- 5: Vorderachse
- 6: Rad
- 7: Hinterachse
- 8: Bereich des Chassis
- 9: Chassis
- 10: Achskörper
- 11: Pendelvorrichtung
- 12: Schwenkvorrichtung
- 13: Koppelgetriebe
- 14: Lenker
- 15: Lenker
- 16: oberes Gelenk
- 17: oberes Gelenk
- 18: unteres Gelenk
- 19: unteres Gelenk
- 20: Abstand
- 21: Abstand
- 22: Feldboden
- 23: Koppelglied
- 24: Koppelglied
- 25: Kreisbahn
- 26: Kreisbahn
- 27: virtuelle Pendelachse
- 28: Verschiebung
- 29: Abstand
- 30: Abstand

- 31: Koppelgetriebe
- 32: Abstand
- 33: Schwenklagerung
- 34: Achsschenkelbolzen
- 35: Achsschenkel
- 36: Spurstangenbefestigungsteil
- 37: Achszapfennabe
- 38: Spurstange
- 39: Lenkzylinder
- 40: Kolbenstange
- 41: Koppelglied
- 42: vordere Kante
- 43: hintere Kante
- 44: Wenderadius
- 45: Wenderadius

- FR: Vorausfahrtrichtung

## Patentansprüche

1. Fahrzeug mit einem Chassis (9), zumindest einer dem Chassis (9) zugeordneten Laufräder (4) tragenden Vorderachse (5) und einer der Vorderachse (5) in Vorausfahrtrichtung nachgeordneten, zumindest zwei lenkbare Räder (6) tragenden Hinterachse (7), wobei die Hinterachse (7) quer zur Fahrrichtung pendelnd am Chassis (9) angelenkt ist und zumindest einen Achskörper (10) umfasst und Bereiche des Chassis (9) den Rädern (6) der Hinterachse (7) wenigstens teilweise benachbart zugeordnet sind, wobei
die Hinterachse (7) mittels einer eine quer zur Fahrtrichtung (FR) orientierte Verschiebung (28) der Hinterachse (7) ermöglichenden Pendelvorrichtung (11) mit dem Chassis (9) gekoppelt ist, **dadurch gekennzeichnet, dass** jedes Rad (6a. 6b) der Hinterachse (7) mittels einer eine quer zur Fahrtrichtung (FR) orientierte Verschiebung (32) jedes Rades (6a, 6b) ermöglichenden Schwenkvorrichtung (12) mit dem Achskörper (10) der Hinterachse (7) gekoppelt ist, dass die Schwenkvorrichtung (12) als Koppelgetriebe (31) ausgebildet ist, dass jedes Koppelgetriebe (31) der Schwenkvorrichtung (12) ein jeder Schwenklagerung (33) zugeordnetes Spurstangenbefestigungsteil (36) zur schwenkbeweglichen Aufnahme einer Spurstange (38) umfasst und dass der Hinterachse (7) ein als doppeltwirkender Hubzylinder ausgebildeter Lenkzylinder (39) zugeordnet ist, der am Achskörper (10) der Hinterachse (7) lagefixiert ist und der jeweils schwenkbeweglich mit den Spurstangen (38) gekoppelt ist.

2. Fahrzeug mit einem Chassis nach Anspruch 1,
**dadurch gekennzeichnet,**
**dass** die Pendelvorrichtung (11) als Koppelgetriebe (13) ausgebildet ist, wobei durch hangneigungsbedingte Bewegung der Koppelglieder (23, 24) des Koppelgetriebes (13) die quer zur Fahrtrichtung (FR) orientierte Verschiebung (28) der Hinterachse (7) bewirkt wird.

3. Fahrzeug mit einem Chassis nach Anspruch 2,
**dadurch gekennzeichnet,**
**dass** die Verschiebung (28) der Hinterachse (7) eine Vergrößerung des Abstandes (29) des in Verschieberichtung (28) liegenden Rades (6a, 6b) zu dem ihm benachbarten Bereich (8a, 8b) des Chassis (9) bewirkt, während das weitere Rad (6b, 6a) unter den diesem Rad (6b, 6a) benachbarten Bereich (8b, 8a) des Chassis (9) verschwenkt wird.

4. Fahrzeug mit einem Chassis nach einem der Ansprüche 2 und 3,
**dadurch gekennzeichnet,**
**dass** die Koppelglieder (23, 24) als paarweise angeordnete Lenker (14, 15) ausgebildet sind, die jeder mit dem Achskörper (10) und dem Chassis (9) durch obere und untere Gelenke (16-19) verbunden sind, wobei der Abstand zwischen den oberen Gelenken (16, 17) der Lenker (14, 15) kleiner ist als der Abstand zwischen den unteren Gelenken (18, 19) derselben.

5. Fahrzeug mit einem Chassis nach Anspruch 4,
**dadurch gekennzeichnet,**
**dass** die oberen und unteren Gelenke (16-19) jedes der paarweise angeordneten Lenker (14, 15) denselben Abstand (30) zueinander haben und dieser Abstand (30) jeweils geringer ist als der Abstand der unteren Gelenke (17, 18) zueinander.

6. Fahrzeug mit einem Chassis nach Anspruch 1,
**dadurch gekennzeichnet,**
**dass** durch Aktivierung der Bewegung der Koppelglieder (41) des Koppelgetriebes (31) die quer zur Fahrtrichtung (FR) orientierte Verschiebung (32) der Räder (6a, 6b) der Hinterachse (7) zu deren Achskörper (10) bewirkt wird.

7. Fahrzeug mit einem Chassis nach Anspruch 6,
**dadurch gekennzeichnet,**
**dass** das Koppelgetriebe (31) der Schwenkvorrichtung (12) zumindest folgende Koppelglieder (41) umfasst
die jedem Rad (6a, 6b) zugeordnete und an der Hinterachse (7) befestigten Schwenklagerungen (33)
einen Achsschenkelbolzen (34), der schwenkbeweglich von der Schwenklagerung (33) aufgenommen wird
einem in eine Achsschenkelnabe (37) mündenden Achsschenkel (35), der drehbar mit dem Achsschenkelbolzen (34) verbunden ist und die Achsschenkelnabe (37) das jeweilige Rad (6a, 6b) aufnimmt und
der Achsschenkelbolzen (34) bezüglich der Vorausfahrtrichtung (FR) vor dem jeweiligen Achsschenkel (35) angeordnet ist.

8. Fahrzeug mit einem Chassis nach einem der Ansprüchen 6 oder 7,
**dadurch gekennzeichnet,**
**dass** die Räder (6a, 6b) der Hinterachse (7) in der maximalen Kurvenposition eine Lage einnehmen, in der das innen liegende Rad (6a) eine Vorderkante (42) aufweist, die in der Nähe des diesem Rad (6a) benachbarten Bereichs (8a) des Chassis (9) angeordnet ist und in der eine hintere Kante (43) des Äußeren Rades (6b) in der Nähe des diesem Rad (6b) benachbarten Bereichs (8b) des Chassis (9) angeordnet ist.

9. Fahrzeug mit einem Chassis nach einem der Ansprüche 6 bis 8,
**dadurch gekennzeichnet,**
**dass** in der maximalen Kurvenposition das innere Rad (6a) einen Wenderadius (44) aufweist, der kleiner als der Wenderadius (45) des äußeren Rades (6b) ist.

10. Fahrzeug mit einem Chassis nach einem der vorhergehenden Ansprüche,
**dadurch gekennzeichnet,**
**dass** das Fahrzeug als landwirtschaftliche Arbeitsmaschine (1), insbesondere Mähdrescher (2) ausgebildet ist.

## Claims

1. A vehicle comprising a chassis (9), at least one front axle (5) associated with the chassis (9) and carrying land wheels (4) and a rear axle (7) arranged behind the front axle (5) in the direction of forward travel and carrying at least two steerable wheels (6), wherein the rear axle (7) is pivotably mounted to the chassis (9) in swinging relationship transversely relative to the direction of travel and includes at least one axle body (10), and regions of the chassis (9) are at least partially adjacently associated with the wheels (6) of the rear axle (7), wherein the rear axle (7) is coupled to the chassis (9) by means of a swing device (11) permitting displacement (28) of the rear axle (7), that is oriented transversely to the direction of travel (FR), **characterised in that** each wheel (6a, 6b) of the rear axle (7) is coupled to the axle body (10) of the rear axle (7) by means of a pivoting device (12) permitting displacement (32) of each wheel (6a, 6b), that is oriented transversely to the direction of travel (FR), the pivoting device (12) is in the form of a coupling transmission (31), each coupling transmission (31) of the pivoting device (12) includes a track rod fixing portion (36) associated with each pivoting mounting (33) for pivotably movably mounting a track rod (38), and associated with the rear axle (7) is a steering cylinder (39) which is in the form of a double-acting stroke cylinder and which is positionally fixed to the axle body (10) of the rear axle (7) and which is respectively pivotably movably coupled to the track rods (38).

2. A vehicle comprising a chassis according to claim 1 **characterised in that** the swing device (11) is in the form of a coupling transmission (13), wherein the displacement (28) of the rear axle (7), that is oriented transversely to the direction of travel (FR), is implemented by slope-governed movement of the coupling members (23, 24) of the coupling transmission (13).

3. A vehicle comprising a chassis according to claim 2 **characterised in that** the displacement (28) of the rear axle (7) causes an increase in the spacing (29) of the wheel (6a, 6b) disposed in the direction of displacement (28) relative to the region (8a, 8b) of the chassis (9), that is adjacent to said wheel, while the further wheel (6b, 6a) is pivoted under the region (8b, 8a) of the chassis (9), that is adjacent to said wheel (6b, 6a).

4. A vehicle comprising a chassis according to one of claims 2 and 3 **characterised in that** the coupling members (23, 24) are in the form of links (14, 15) which are arranged in pairs and which are each connected to the axle body (10) and the chassis (9) by upper and lower joints (16-19), wherein the spacing between the upper joints (16, 17) of the links (14, 15) is less than the spacing between the lower joints (18, 19).

5. A vehicle comprising a chassis according to claim 4 **characterised in that** the upper and lower joints (16-19) of each of the links (14, 15) arranged in pairs are at the same spacing (30) relative to each other and that spacing (30) is respectively less than the spacing of the lower joints (17, 18) relative to each other.

6. A vehicle comprising a chassis according to claim 1 **characterised in that** the displacement (32) of the wheels (6a, 6b) of the rear axle (7), that is oriented transversely to the direction of travel (FR) relative to the rear axle body (10), is implemented by activation of the movement of the coupling members (41) of the coupling transmission (31).

7. A vehicle comprising a chassis according to claim 6 **characterised in that**
the coupling transmission (31) of the pivoting device (12) includes at least the following coupling members (41):
the pivoting mountings (33) associated with each wheel (6a, 6b) and fixed to the rear axle (7),
a king pin (34) which is pivotably movably mounted by the pivot mounting (33),
a stub axle (35) which opens into a stub axle hub (37) and which is rotatably connected to the king pin (34) and the stub axle hub (37) mounts the respective wheel (6a, 6b), and
the king pin (34) is arranged in front of the respective stub axle (35) with respect to the direction of forward travel (FR).

8. A vehicle comprising a chassis according to one of claims 6 and 7 **characterised in that** the wheels (6a, 6b) of the rear axle (7) in the maximum curve position assume a position in which the inwardly disposed wheel (6a) has a front edge (42) which is arranged in the proximity of the region (8a) of the chassis (9), that is adjacent to said wheel (6a), and in which a rear edge (43) of the outer wheel (6b) is arranged in the proximity of the region (8b) of the chassis (9), that is adjacent to said wheel (6b).

9. A vehicle comprising a chassis according to one of claims 6 to 8 **characterised in that** in the maximum curve position the inner wheel (6a) has a turning radius (44) less than the turning radius (45) of the outer wheel (6b).

10. A vehicle comprising a chassis according to one of the preceding claims **characterised in that** the vehicle is in the form of an agricultural working machine (1), in particular a combine harvester (2).

## Revendications

1. Véhicule comportant un châssis (9), au moins un essieu avant (5) portant des roues porteuses (4) et associé au châssis (9) et un essieu arrière (7) disposé derrière l'essieu avant (5) dans le sens de marche avant et portant au moins deux roues directrices (6), l'essieu arrière (7) étant articulé sur le châssis (9) de manière à pouvoir osciller transversalement au sens de marche et comprenant au moins un corps d'essieu (10), et des zones du châssis (9) étant associées aux roues (6) de l'essieu arrière (7) de manière au moins partiellement adjacente, l'essieu arrière (7) étant couplé au châssis (9) au moyen d'un dispositif pendulaire (11) permettant un déplacement (28) orienté transversalement au sens de marche (FR) de l'essieu arrière (7), **caractérisé en ce que** chaque roue (6a, 6b) de l'essieu arrière (7) est couplée au corps d'essieu (10) de l'essieu arrière (7) au moyen d'un dispositif pivotant (12) permettant un déplacement (32) orienté transversalement au sens de marche (32) de chaque roue (6a, 6b), **en ce que** le dispositif pivotant (12) est réalisé sous la forme d'un mécanisme d'accouplement (31), **en ce que** chaque mécanisme d'accouplement (31) du dispositif pivotant (12) comprend une pièce de fixation de barre d'accouplement (36) associée à chaque palier de pivotement (33) pour recevoir de manière pivotante une barre d'accouplement (38) et **en ce qu'**à l'essieu arrière (7) est associé un vérin de direction (39) réalisé sous la forme d'un vérin à double effet qui est en position fixe et qui est couplé chaque fois de manière pivotante aux barres d'accouplement (38).

2. Véhicule comportant un châssis selon la revendication 1, **caractérisé en ce que** le dispositif pendulaire (11) est réalisé sous la forme d'un mécanisme d'accouplement (13), le mouvement des organes d'accouplement (23, 24) du mécanisme d'accouplement (13) dû à la déclivité provoquant un déplacement (28) de l'essieu arrière (7) orienté transversalement au sens de marche (FR).

3. Véhicule comportant un châssis selon la revendication 2, **caractérisé en ce que** le déplacement (28) de l'essieu arrière (7) provoque un agrandissement de la distance (29) de la roue (6a, 6b) située dans la direction de déplacement (28) par rapport à la zone (8a, 8b) du châssis (9) qui lui est adjacente, tandis que l'autre roue (6b, 6a) pivote sous la zone (8b, 8a) du châssis (9) adjacente à cette roue (6b, 6a).

4. Véhicule comportant un châssis selon une des revendications 2 et 3, **caractérisé en ce que** les organes d'accouplement (23, 24) sont réalisés sous la forme de bras de guidage (14, 15) disposés par paires, qui sont reliés chacun au corps d'essieu (10) et au châssis (9) par des articulations supérieures et inférieures (16-19), la distance entre les articulations supérieures (16, 17) des bras de guidage (14, 15) étant inférieure à la distance entre les articulations inférieures (18, 19) de ceux-ci.

5. Véhicule comportant un châssis selon la revendication 4, **caractérisé en ce que** les articulations supérieures et inférieures (16-19) de chacun des bras de guidage (14, 15) disposés par paires ont la même distance (30) entre elles et cette distance (30) est chaque fois inférieure à la distance des articulations inférieures (17, 18) entre elles.

6. Véhicule comportant un châssis selon la revendication 1, **caractérisé en ce que** l'activation du mouvement des organes d'accouplement (41) du mécanisme d'accouplement (31) provoque un déplacement (32) de l'essieu arrière (7), orienté transversalement au sens de marche (FR) des roues (6a, 6b), par rapport à son corps d'essieu (10).

7. Véhicule comportant un châssis selon la revendication 6, **caractérisé en ce que** le mécanisme d'accouplement (31) du dispositif pivotant (12) comprend au moins les organes d'accouplement (41) suivants :
les paliers de pivotement (33) associés à chaque roue (6a, 6b) et fixés à l'essieu arrière (7),
un pivot de fusée d'essieu (34) qui est reçu de manière pivotante par le palier de pivotement (33),
une fusée d'essieu (35) qui aboutit à un moyeu de fusée d'essieu (37) et qui est reliée de manière tournante au pivot de fusée d'essieu (34), lequel moyeu de fusée d'essieu (37) reçoit la roue (6a, 6b) respective, et
le pivot de fusée d'essieu (34) disposé devant la fusée d'essieu (35) respective par rapport au sens de marche avant (FR).

8. Véhicule comportant un châssis selon une des revendications 6 ou 7, **caractérisé en ce que**, dans la position de virage maximum, les roues (6a, 6b) de l'essieu arrière (7) adoptent une position où la roue intérieure (6a) présente un bord avant (42) disposé à proximité de la zone (8a) du châssis (9) adjacente à cette roue (6a) et où un bord arrière (43) de la roue extérieure (6b) est disposé à proximité de la zone (8b) du châssis (9) adjacente à cette roue (6b).

9. Véhicule comportant un châssis selon une des revendications 6 à 8, **caractérisé en ce que**, dans la position de virage maximum, la roue intérieure (6a) présente un rayon de braquage (44) inférieur au rayon de braquage (45) de la roue extérieure (6b).

10. Véhicule comportant un châssis selon une des revendications précédentes, **caractérisé en ce que** le véhicule est réalisé sous la forme d'une machine de travail agricole (1), en particulier d'une moissonneuse-batteuse (2).
